# EUROPEAN PATENT SPECIFICATION

(11) **EP 4 283 953 B1**
(45) Date of publication and mention of the grant of the patent: **29.10.2025**
(21) Application number: 21920318.9
(22) Date of filing: 22.01.2021
(51) Int. Cl.: H04L 65/40, H04L 67/10, H04L 67/00, H04W 4/06

(54) **INFORMATION TRANSMISSION METHOD AND APPARATUS, AND DEVICE AND STORAGE MEDIUM**
INFORMATIONSÜBERTRAGUNGSVERFAHREN UND -VORRICHTUNG SOWIE VORRICHTUNG UND SPEICHERMEDIUM
PROCÉDÉ ET APPAREIL DE TRANSMISSION D'INFORMATIONS, ET DISPOSITIF ET SUPPORT DE STOCKAGE

(43) Date of publication of application: 29.11.2023
(73) Proprietor: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN); XU, Yang, Dongguan, Guangdong 523860 (CN)
(74) Representative: Ipside
(86) International application number: PCT/CN2021/073399
(87) International publication number: WO 2022/155920

(56) References cited:
- CA-A1- 3 057 038
- CA-C- 2 795 191
- CN-A- 103 560 943
- CN-A- 111 597 055
- CN-A- 111 625 218
- CN-A- 111 835 873

## Description

### TECHNICAL FIELD

The present disclosure relates to the field of communication technologies, and in particular to a message transmission method and a device.

### BACKGROUND

With the development of technologies such as Artificial Intelligence, big data analysis or the like, AI (Artificial Intelligence)/ML (Machine Learning) becomes to be widely used in intelligent data analyses such as statistical analysis of data, predictive analysis of data, etc.

In the field of mobile communication, terminal devices would also increasingly adopt AI/ML models for intelligent operation, such as automatic speech recognition, image processing, user behavior prediction, and service experience analysis, thereby enabling terminal devices to serve more intelligent business scenarios. Due to the relatively limited capabilities of terminal devices, for example, certain limitations of computation capacity, storage capacity, and battery capacity etc., or due to the different distribution areas of terminal devices, a plurality of terminal devices may separately use local data for the same type of data analysis and interact with each other for analysis results etc. In other words, a plurality of terminal devices cooperate with each other for distributed data analysis. Obviously, the distributed data analysis performed by a plurality of terminal devices can produce a much greater extension of data analysis results than that can be produced by a single terminal device.

However, for a terminal device requiring to perform the distributed data analysis, it is necessary to further discuss and study on how to discover another terminal devices that also require to perform the distributed data analysis, such that the terminal device is enabled to perform distributed data analysis in conjunction with the another terminal devices.

Chinese Patent Application No. CN 111 625 218 A discloses a big data processing method and system developed by custom library. The method includes: build an application process based on the open source computing framework Spark compatible with stream computing and batch processing, and define an interface for custom library development; carry out custom library development, implement the interface protocol for custom library development; write processing code related to the data processing business logic in the data processing application, and output the Jar package; configure the corresponding custom library information, including the order of the custom libraries and the full class names of the implementation classes of each custom library; register all configured custom libraries to the data processing application and broadcast to each distributed computing node; and package the data processing application into a Jar package and submit it to Spark for distributed and parallel execution of data processing tasks.

### SUMMARY OF THE DISCLOSURE

The present disclosure provides message transmission methods and a device. The technical solutions are described as follows.

According to a first aspect of the present disclosure, a message transmission method as set out in the appended claims 1-4 is provided.

According to a second aspect of the present disclosure, a message transmission method as set out in the appended claims 5-8 is provided.

According to a third aspect of the present disclosure, a device as set out in appended claim 9 is provided.

In the present application, the distributed data analysis is performed by using near-field communication technology, so that the distributed data analysis with higher time latency requirements is better satisfied, thereby supporting more types of distributed data analyses.

### BRIEF DESCRIPTION OF THE DRAWINGS

In order to more clearly illustrate technical solutions in the present disclosure, the drawings required in the description of the embodiments will be briefly introduced below. Obviously, the drawings in the following description are only some embodiments of the present disclosure. For those of ordinary skills in the art, other drawings could be obtained based on these drawings without creative efforts.
Fig. 1 is a schematic diagram of a PC5 unicast link according to an embodiment of the present disclosure.
Fig. 2 is a schematic diagram of a communication system according to an embodiment of the present disclosure.
Fig. 3 is a flowchart of a message transmission method according to an embodiment of the present disclosure.
Fig. 4 is a flowchart of a message transmission method according to another embodiment of the present disclosure.
Fig. 5 is a flowchart of a message transmission method according to a further embodiment of the present disclosure.
Fig. 6 is a flowchart of a message transmission method according to yet another embodiment of the present disclosure.
Fig. 7 is a block diagram of a message transmission apparatus according to an embodiment of the present disclosure.
Fig. 8 is a block diagram of a message transmission apparatus according to another embodiment of the present disclosure.
Fig. 9 is a block diagram of a message transmission apparatus according to yet another embodiment of the present disclosure.
Fig. 10 is a block diagram of a message transmission apparatus according to yet another embodiment of the present disclosure.
Fig. 11 is a block diagram of a first device according to an embodiment of the present disclosure.
Fig. 12 is a block diagram of a second device according to an embodiment of the present disclosure.

### DETAILED DESCRIPTION

In order to clarify the purposes, technical solutions and technical advantages of the present disclosure, embodiments of the present disclosure will be described in further detail below with reference to the accompanying drawings.

Network architectures and business scenarios described in the embodiments of the present disclosure are merely for clarified illustration of the technical solutions in the embodiments of the present disclosure, and do not impose any limitation on the technical solutions provided in the embodiments of the present disclosure. Those of ordinary skills in the art will appreciate that, with the evolution of network architectures and the emergence of new business scenarios, the technical solutions provided in the embodiments of the present disclosure may be likely applicable to similar technical problems.

With the development of technologies such as Artificial Intelligence, big data analysis or the like, AI/ML become to be widely used in intelligent data analysis such as statistical analysis of data, predictive analysis of data or etc.

In the field of mobile communication, terminal devices would also increasingly adopt AI/ML models for intelligent operations such as automatic speech recognition, image processing, user behavior prediction and service experience analysis, thereby enabling the terminal devices to serve more intelligent business scenarios. Due to the relatively limited capabilities of terminal devices, for example, certain limitations of computation capacity, storage capacity and battery capacity etc., or, due to the different distribution areas of terminal devices, multiple terminal devices can separately use local data for the same type of data analysis and interact with each other for analysis results etc. In other words, multiple terminal devices cooperate with each other for distributed data analysis. Obviously, distributed data analysis performed by a plurality of terminal devices can produce a much greater range of data analysis results than that can be produced by a single terminal device.

If a plurality of terminal devices are to cooperate with each other for distributed data analysis, then direct communication capability between the plurality of terminal devices is required for considerations such as data interaction latency and efficiency. In related technologies, a direct communication between two terminal devices with ProSe (Proximity-based Services) capability can be performed via a PC5 unicast link. The following is a brief illustration of the PC5 unicast link and ProSe.

The ProSe is a scheme configured to support communication between devices that are located physically proximal to each other. Specifically, the purpose of ProSe is to discover nearby application-operated devices, and to ultimately support application-related data exchange. For example, one may consider that ProSe is applied to applications such as Social Networking Services (SNS), business applications and games.

ProSe may also be referred to as device-to-device (D2D) communication. In other words, ProSe refers to a communication scheme for establishing a direct link between a plurality of terminal devices, so that user data (e.g., audio data, multi-media data, etc.) can be directly exchanged between the terminal apparatuses without routing through a network. ProSe communication may include UE to UE communication, Peer-to-Peer (P2P) communication, etc. In addition, ProSe communication may be applied to machine-to-machine (M2M) communication, machine-type communication (MTC), etc. Therefore, ProSe is regarded as a solution to reduce the workload of base stations due to rapid growth of digital traffic. In addition, by adopting ProSe, technical effects such as a reduction in the procedures of the base stations, a reduction in the power consumption of the devices involved in ProSe, an increase in the data transmission rate, an increase in the network capacity and an expansion of the load distribution and cell coverage may be expected.

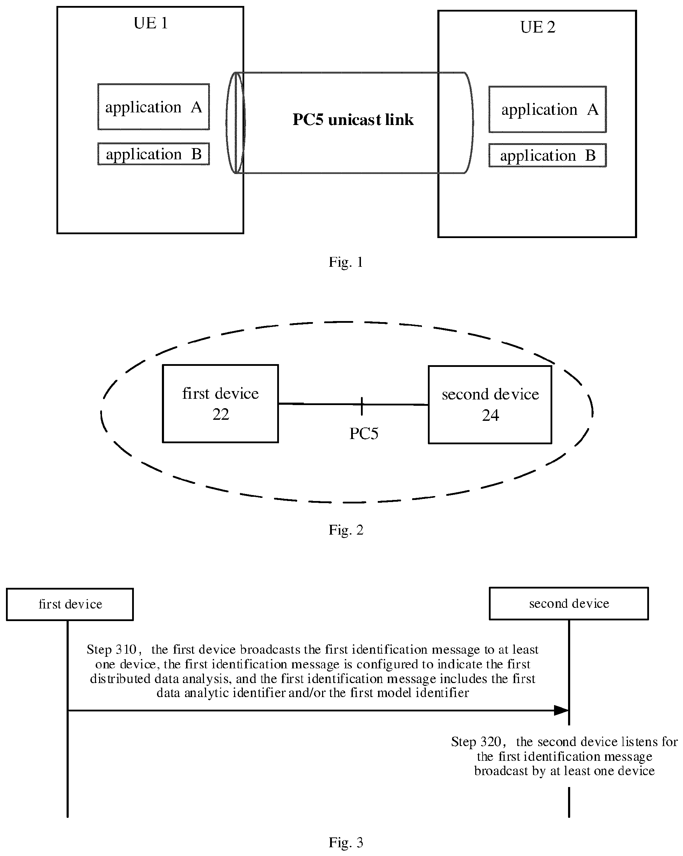

As shown in Fig. 1, a terminal device with ProSe capability may directly communicate with another terminal device with ProSe capability via a PC5 unicast link (i.e., PC5 interface).

However, although a plurality of terminal devices are capable of communicating with each other directly via the PC5 unicast link, the AI/ML model negotiation and distributed data analysis among a plurality of terminal devices via the PC5 unicast link are currently not supported. In related technologies, the distributed data analysis is generally relied on that: each terminal device established a connection with a cloud server separately, and the cloud server then comprehensively analyzes the information provided by each terminal device, and performs a data analysis of a greater scale. However, due to the long-time latency of the interaction between the terminal device and the cloud server, the data analysis requiring relatively high time limitation cannot be satisfied.

For this reason, the present disclosure provides a message transmission method, which may be configured for terminal devices requiring distributed data analysis to discover each other. This facilitates further establishment of direct-connection communication supporting distributed data analysis, and a distributed data analysis with high latency requirements can be better satisfied. The technical solution of the present disclosure will be described and illustrated below with reference to several embodiments.

As shown in Fig. 2, a schematic diagram of a communication system according to an embodiment of the present disclosure is illustrated. The communication system includes a first device 22 and a second device 24.

In the embodiment of the present disclosure, each of the first device 22 and the second device 24 is a terminal device with ProSe capability. A direct communication between the first device 22 and the second device 24 is implemented through the PC5 interfaces.

In some embodiments, the first device 22 and the second device 24 may include various handheld devices with wireless communication capabilities, in-vehicle devices, wearable devices, computation devices or other processing devices connected to a wireless modem, and various forms of user equipments, mobile stations (MS), terminal devices etc. The first device 22 and the second device 24 may be the same type of terminal device, such as an in-vehicle device for both. The first device 22 and the second device 24 may alternatively be different types of terminal device, such as an in-vehicle device for the first device 22 and a wearable device for the second device 24. The technical solutions provided in the present disclosure may be applied to various communication systems, such as: New Radio (NR) systems, evolution systems based on NR systems, New Generation Communication Systems, device-to-device communication systems, machine-to-machine communication systems, machine-type communication systems, V2V (Vehicle to Vehicle) communication systems, V2X (Vehicle to Everything) systems or etc.

As shown in Fig. 3, a flowchart of a message transmission method according to an embodiment of the present disclosure is illustrated. The method may be performed by the communication system of Fig. 1. The method includes at least part of the operations at blocks illustrated in Fig. 3.

At block 310, broadcasting, by the first device, a first identification message to at least one device. The first identification message is configured to indicate a first distributed data analysis, and the first identification message includes a first data analytic identifier and/or a first model identifier.

When a terminal device requires to perform a distributed data analysis, the terminal device may broadcast an identification message, to indicate the distributed data analysis required to be performed, to another terminal device. Alternatively, when a terminal device supports to perform the distributed data analysis, the terminal device may broadcast the identification message, to indicate the distributed data analysis supported to perform, to the another terminal device. The types of the distributed data analyses are not limited in embodiments of the present disclosure. In some embodiments, the distributed data analysis includes: a statistical analysis of specific data, a predictive analysis of specific data.

In some embodiments, the distributed data analysis may be indicated by the identification message. The identification message includes a data analytic identifier (Analytic Id) and/or a model identifier (model id). The data analytic identifier is configured for indicating the type of the distributed data analysis. In some embodiments, the type of the distributed data analysis includes at least one of : a terminal device mobility analysis (e.g. statistics or predictions about the location and path of the terminal device); a terminal device communication characteristics analysis (e.g. statistics or predictions about the communication period, the communication time, the domain name, the slice, the port number and the data volume used for the communication); a terminal device performance analysis; a service experience analysis for specific applications and specific slices; and a wireless signal quality analysis. The model identifier is configured for indicating the model used for the distributed data analysis, such as the AL/ML model.

In some embodiments of the present disclosure, the first device, when requiring to perform the first distributed data analysis, or supporting the first distributed data analysis, may broadcast the first identification message to at least one device. The first identification message is configured for indicating the first distributed data analysis. In some embodiments, the first distributed data analysis includes one type of or a plurality of types of the above-mentioned types of distributed data analyses.

The first identification message includes the first data analytic identifier and/or the first model identifier. For example, the first identification message includes the first data analytic identifier. In some embodiments, the first identification message includes the first data analytic identifier and the first model identifier. The first data analytic identifier is configured to indicate the type of the first distributed data analysis, the first model identifier is configured to indicate the model used by the first distributed data analysis. In some embodiments, the first distributed data analysis includes a plurality of distributed data analyses. At this point, the first identification message also includes a plurality of identification messages, and one of the first identification messages is configured to indicate one of the first distributed data analyses.

In some embodiments, in response to the first identification message including the first data analytic identifier and the first model identifier, the first identification message is further configured to determine an association relationship between the first data analytic identifier and the first model identifier. In some embodiments, the first identification message explicitly indicates the association relationship between the first data analytic identifier and the first model identifier. For example, the first identification message includes the association relationship between the first data analytic identifier and the first model identifier. Alternatively, the first identification message implicitly indicates the association relationship between the first data analytic identifier and the first model identifier. For example, a data structure of the first identification message is configured to indicate the association relationship between the first data analytic identifier and the first model identifier.

At block 320, listening, by the second device, for the first identification message broadcast by at least one device.

The second device may listen for the identification message broadcast by at least one device, to specify the distributed data analysis that each device requires or supports to perform. In some embodiments of the present disclosure, the at least one device in the above-mentioned step 310 includes the second device, and the at least one device in the above-mentioned step 320 includes the first device. Accordingly, the second device may listen to the first identification message broadcast by the first device, to specify that the first device requires or supports to perform the first distributed data analysis, and thus chooses to establish the communication connection with the first device. After the communication connection is successfully established between the second device and the first device, each of the second device and the first device may use the established communication connection to perform the data interaction associated with the distributed data analysis, such as, an interaction of analytic parameters used for the distributed data analysis, an interaction of analysis results of the distributed data analysis, etc.

In summary, in the technical solution provided by the present disclosure, the identification message indicating the distributed data analysis is broadcast by the terminal device, to indicate to another terminal device that it requires or supports to perform the distributed data analysis, to ensure that the another terminal device that also requires to or supports to perform the distributed data analysis is capable of discovering the terminal device, thereby facilitating the subsequent establishment of the communication connection between these terminal devices that supports the distributed data analysis. In the present application, the distributed data analysis is implemented by using Proximity-based communication technology or near-field communication technology. The high latency requirements of some distributed data analyses are better satisfied, and more kinds of distributed data analyses are thus supported.

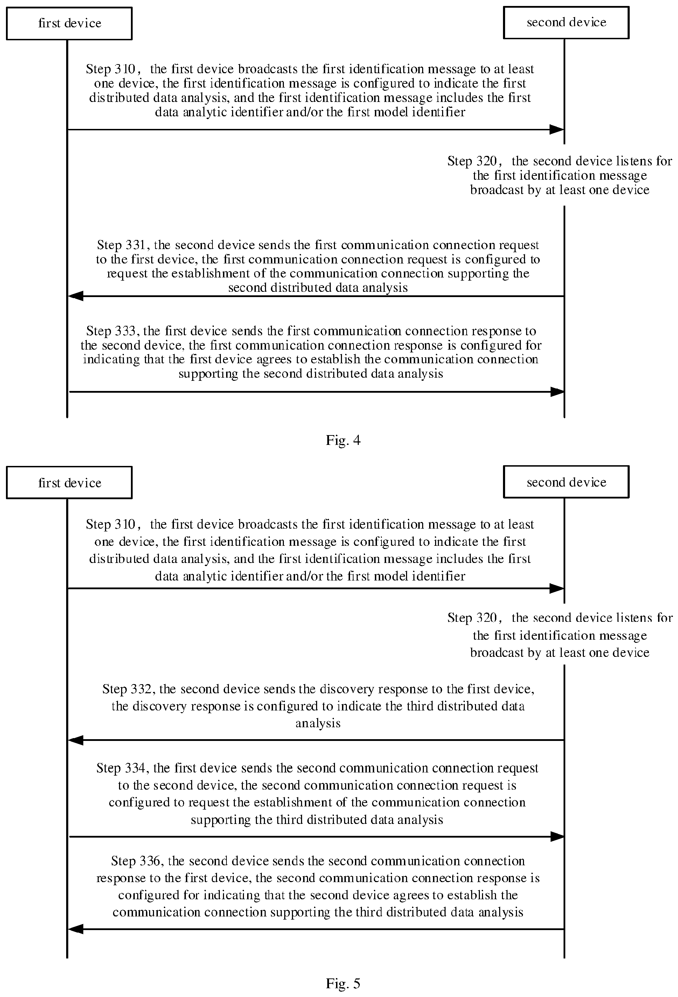

In some embodiments, as shown in Fig. 4, after the above-mentioned step 320, a step 331 is further included, in which the second device sends a first communication connection request to the first device. The first communication connection request is configured to request an establishment of a communication connection supporting a second distributed data analysis.

The second device, after listening to the first identification message broadcast by the first device, while requiring or supporting to perform a distributed data analysis as well, may send the first communication connection request to the first device, to request to establish the communication connection supporting the second distributed data analysis. In some embodiments, the second distributed data analysis is identical to the first distributed data analysis. In other words, the distributed data analysis that the second device is required or supports to perform is the same as the first device. Alternatively, the second distributed data analysis belongs to the first distributed data analysis. In other words, the distributed data analysis required or supported to be performed by the second device is a part of the distributed data analysis required or supported to be performed by the first device.

To enable the first device to specify the distributed data analysis that is required or supported to be performed by the second device, alternatively, the first communication connection request includes a second data analytic identifier and/or a second model identifier. The second data analytic identifier is configured to indicate a type of the second distributed data analysis, the second model identifier is configured to indicate a model used by the second distributed data analysis. In a case where the second distributed data analysis is identical to the first distributed data analysis, the second data analytic identifier is identical to the first data analytic identifier, and the second model identifier is identical to the first model identifier. In a case where the second distributed data analysis belongs to the first distributed data analysis, the second data analytic identifier belongs to the first data analytic identifier, and the second model identifier belongs to the first model identifier.

To reduce the message transmission overhead between the first device and the second device, alternatively, the first communication connection request includes the analytic parameters used for the second distributed data analysis, such that the first device may directly use the analytic parameters for the second distributed data analysis after the communication connection is established. In some embodiments, the analytic parameters used by the second distributed data analysis include at least one of: area information of the second device (e.g., geographic location information of the second device, location information of the network in which the second device is located, cell information of the cell in which the second device is located), slice information of the network in which the second device is located, network identifier of the network in which the second device is located (e.g., Public Land Mobile Network (PLMN) id), and an application identifier of the application used by the second device.

In some embodiments, as shown in Fig. 4, after the above-mentioned step 331, a step 333 is further included, in which the first device sends a first communication connection response to the second device. The first communication connection response is configured for indicating that the first device agrees to establish the communication connection supporting the second distributed data analysis.

Upon receiving the first communication connection request from the second device, the first device is ready to establish the communication connection with the second device that supports the second distributed data analysis. In some embodiments of the present disclosure, to make it clear to the second device that the communication connection has been established, the first device may send the first communication connection response to the second device, to indicate to the second device that, the establishment of the communication connection that supports the second distributed data analysis is accepted or agreed. In some embodiments, the first communication connection response includes the second data analytic identifier and/or the second model identifier. The second data analytic identifier is configured to indicate the type of the second distributed data analysis, the second model identifier is configured to indicate the model used by the second distributed data analysis. Afterwards, the second device and the first device may perform the second distributed data analysis based on this communication connection.

In summary, in the technical solution provided by the present disclosure, after listening, by the terminal device, to the identification message indicating the distributed data analysis and broadcast by another terminal device, if the terminal device also requires or supports to perform the distributed data analysis, then the terminal device sends the communication connection request to the another terminal device, so as to establish the communication connection supporting the distributed data analysis between the terminal device and the another terminal device, and thus the distributed data analysis is realized through Proximity-based communication technology.

In some embodiments, the first identification message is carried in a discovery solicitation. As shown in Fig. 5, after the above-mentioned step 320, a step 332 is further included, in which the second device sends a discovery response to the first device. The discovery response is configured to indicate a third distributed data analysis.

In Proximity-based communication technology, the terminal device may broadcast the discovery solicitation, thereby allowing another terminal device to discover the terminal device. In the present disclosure, the first identification message broadcast by the first device may be carried in the discovery solicitation broadcast by the first device. After listening to the discovery solicitation broadcast by the first device, the second device may send the discovery response to the first device. In embodiments of the present disclosure, if the second device also requires or supports to perform the distributed data analysis, the discovery response sent by the second device is configured to indicate to the first device the third distributed data analysis.

In some embodiments, the third distributed data analysis is identical to the first distributed data analysis. In other words, the distributed data analysis that the second device is required or supported to perform is the same as that is required or supported to perform by the first device. Alternatively, the third distributed data analysis belongs to the first distributed data analysis. In other words, the distributed data analysis required or supported to be performed by the second device is a part of the distributed data analysis required or supported to be performed by the first device.

To enable the first device to specify the distributed data analysis that is required or supported to be performed by the second device, alternatively, the discovery response sent by the second device includes a third data analytic identifier and/or a third model identifier. The third data analytic identifier is configured to indicate a type of the third distributed data analysis, the third model identifier is configured to indicate a model used by the third distributed data analysis. In a case where the third distributed data analysis is identical to the first distributed data analysis, the third data analytic identifier is identical to the first data analytic identifier, and the third model identifier is identical to the first model identifier. In a case where the third distributed data analysis belongs to the first distributed data analysis, the third data analytic identifier belongs to the first data analytic identifier, and the third model identifier belongs to the first model identifier.

In some embodiments, as shown in Fig. 5, after the above-mentioned step 332, a step 334 is further included, in which the first device sends a second communication connection request to the second device. The second communication connection request is configured to request an establishment of a communication connection supporting the third distributed data analysis.

The first device, upon receiving the discovery response sent by the second device, may then clarify that the second device likewise requires or supports to perform the distributed data analysis. Thus, the communication connection between the first device and the second device may be established to support the distributed data analysis. In light of this, the first device may send the second communication connection request to the second device, to request the establishment of the communication connection that supports the third distributed data analysis.

In order to enable the second device to explicitly request the distributed data analysis supported by the communication connection to be established, alternatively, the second communication connection request includes the third data analytic identifier and/or the third model identifier. The third data analytic identifier is configured to indicate the type of the third distributed data analysis, the third model identifier is configured to indicate the model used by the third distributed data analysis.

To reduce the message transmission overhead between the first device and the second device, alternatively, the second communication connection request includes the analytic parameters used for the third distributed data analysis, such that the second device may directly use the analytic parameters for the third distributed data analysis after the communication connection is established. In some embodiments, the analytic parameters used by the third distributed data analysis include at least one of: area information of the first device (e.g., geographic location information of the first device, location information of a network in which the first device is located, cell information of the cell in which the first device is located), slice information of the network in which the first device is located, a network identifier of the network in which the first device is located (e.g., PLMN id), and an application identifier of the application used by the first device.

In some embodiments, as shown in Fig. 5, after the above-mentioned step 334, a step 336 is further included, in which the second device sends a second communication connection response to the first device. The second communication connection response is configured for indicating that the second device agrees to establish communication connection supporting the third distributed data analysis.

Upon receiving the second communication connection request from the first device, the second device is ready to establish the communication connection with the first device that supports the third distributed data analysis. In some embodiments of the present disclosure, to make it clear to the first device that the communication connection has been established, the second device may send the second communication connection response to the first device, to indicate to the first device that the establishment of the communication connection that supports the third distributed data analysis is accepted or agreed. In some embodiments, the second communication connection response includes the third data analytic identifier and/or the third model identifier. The third data analytic identifier is configured to indicate the type of the third distributed data analysis, the third model identifier is configured to indicate the model used by the third distributed data analysis. Afterwards, the first device and the second device may perform the third distributed data analysis based on this communication connection.

In summary, in the technical solution provided by the present disclosure, after listening, by the terminal device, to the identification message indicating the distributed data analysis and broadcast by another terminal device, the terminal device first indicates to the another terminal device the distributed data analysis that the terminal device requires or supports to be performed in these distributed data analyses, and then the another terminal device sends a communication connection request to the terminal device, so as to establish the communication connection supporting the distributed data analysis between the terminal device and the another terminal device, and thus the distributed data analysis is realized through Proximity-based communication technology.

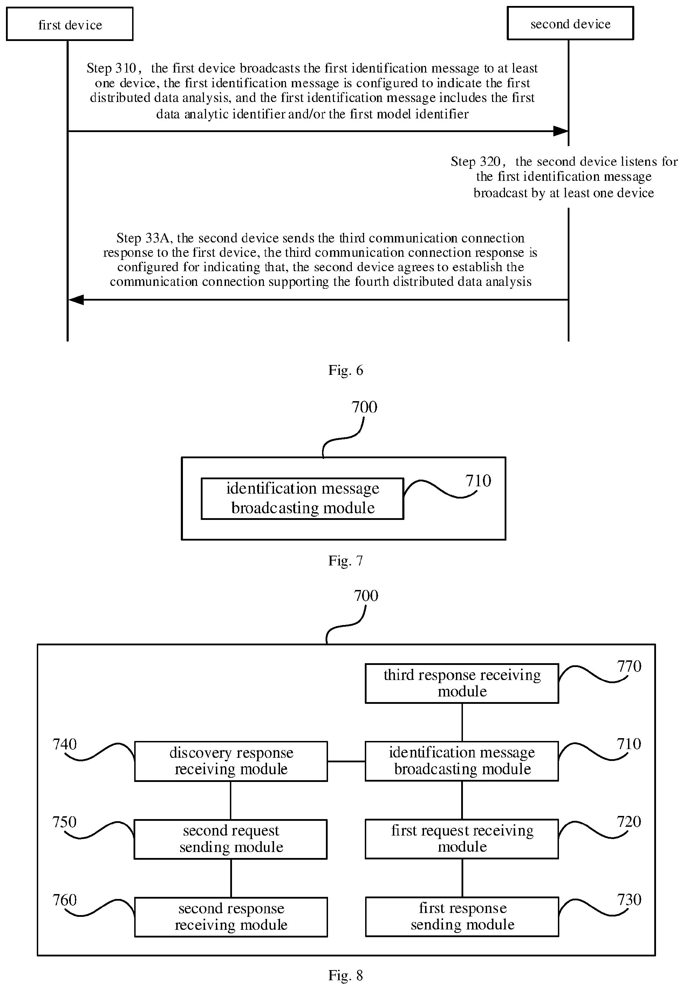

In some embodiments, the first identification message is carried in a third communication connection request. The third communication connection request is configured to request the establishment of the communication connection supporting the first distributed data analysis. As shown in Fig. 6, after the above-mentioned step 320, a step 33A is further included, in which the second device sends the third communication connection response to the first device. The third communication connection response is configured for indicating that, the second device agrees to establish the communication connection supporting a fourth distributed data analysis.

In Proximity-based communication technology, the terminal device may also broadcast direct communication request or directly broadcast the communication connection request, thereby allowing another terminal device to discover the terminal device, and to establish the communication connection with the terminal device. In the present disclosure, the first identification message broadcast by the first device may be carried in the third communication connection request broadcast by the first device. The third communication connection request is configured to request the establishment of the communication connection supporting the first distributed data analysis. After listening to the third communication connection request broadcast by the first device, the second device may send the third communication connection response or the third Direct Communication Accept to the first device. In embodiments of the present disclosure, if the second device also requires or supports to perform the distributed data analysis, then the third communication connection response sent by the second device is configured to indicate to the first device the fourth distributed data analysis.

In some embodiments, the fourth distributed data analysis is identical to the first distributed data analysis. In other words, the distributed data analysis that the second device is required or supports to perform is the same as that is required or supported to perform by the first device. In some embodiments, the fourth distributed data analysis belongs to the first distributed data analysis. In other words, the distributed data analysis required or supported to be performed by the second device is a part of the distributed data analysis required or supported to be performed by the first device.

To reduce the message transmission overhead between the first device and the second device, alternatively, the third communication connection request includes the analytic parameters used for the fourth distributed data analysis, such that the second device may directly use the analytic parameters for the fourth distributed data analysis after the communication connection is established. In some embodiments, the analytic parameters used by the fourth distributed data analysis include at least one of: area information of the first device (e.g., geographic location information of the first device, location information of the network in which the first device is located, cell information of the cell in which the first device is located), slice information of the network in which the first device is located, the network identifier of the network in which the first device is located (e.g., PLMN id), and the application identifier of the application used by the first device.

In order to enable the first device to explicitly clarify the distributed data analysis supported by the communication connection that the second device agrees to establish, alternatively, the third communication connection response includes a fourth data analytic identifier and/or a fourth model identifier. The fourth data analytic identifier is configured to indicate a type of the fourth distributed data analysis, the fourth model identifier is configured to indicate a model used by the fourth distributed data analysis. In a case where the fourth distributed data analysis is identical to the first distributed data analysis, the fourth data analytic identifier is identical to the first data analytic identifier, and the fourth model identifier is identical to the first model identifier. In a case where the fourth distributed data analysis belongs to the first distributed data analysis, the fourth data analytic identifier belongs to the first data analytic identifier, and the fourth model identifier belongs to the first model identifier. Afterwards, the first device and the second device may perform the fourth distributed data analysis based on this communication connection.

In summary, in the technical solution provided by the present disclosure, after listening, by the terminal device, to the identification message indicating the distributed data analysis and broadcast by another terminal device, if the terminal device also requires or supports to perform the distributed data analysis, the terminal device directly establish the communication connection with the another terminal device, and feeds the communication connection response back to the another terminal device, thus the distributed data analysis is realized through the Proximity-based communication technology.

It should be noted that, in the above-mentioned embodiments, the message transmission method provided by the present disclosure is described and illustrated from the perspective of the interaction between the first device and the second device. It should be understood that, the individual steps performed by the first device concerned may be separately implemented as a message transmission method at the first device side, and the individual steps performed by the second device concerned may be separately implemented as a message transmission method at the second device side.

As shown in Fig. 7, a block diagram of a message transmission apparatus according to an embodiment of the present disclosure is illustrated. The apparatus has the function to implement the example method on the first device side described above. The function may be implemented by hardware or by corresponding software executed by hardware. The apparatus may be the first device 22 described above, or may be provided in the first device 22. As shown in Fig. 7, the apparatus 700 may include an identification message broadcasting module 710.

The identification message broadcasting module 710 is configured for broadcasting the first identification message to at least one device. The first identification message is configured to indicate the first distributed data analysis, and the first identification message includes the first data analytic identifier and/or the first model identifier. The first data analytic identifier is configured to indicate the type of the first distributed data analysis, the first model identifier is configured to indicate the model used by the first distributed data analysis.

In some embodiments, in response to the first identification message including the first data analytic identifier and the first model identifier, the first identification message is further configured to determine the association relationship between the first data analytic identifier and the first model identifier.

In some embodiments, the first identification message includes the association relationship between the first data analytic identifier and the first model identifier.

In some embodiments, the data structure of the first identification message is configured to indicate the association relationship between the first data analytic identifier and the first model identifier.

In some embodiments, as shown in Fig. 8, the apparatus 700 further includes: a first request receiving module 720, configured for receiving the first communication connection request from the second device. The first communication connection request is configured to request the establishment of the communication connection supporting the second distributed data analysis. The second distributed data analysis is identical to the first distributed data analysis. In some embodiments, the second distributed data analysis belongs to the first distributed data analysis.

In some embodiments, the first communication connection request includes the second identification message. The second identification message includes the second data analytic identifier and/or the second model identifier. The second data analytic identifier is configured to indicate the type of the second distributed data analysis, the second model identifier is configured to indicate the model used by the second distributed data analysis.

In some embodiments, the first communication connection request includes the analytic parameters used by the second distributed data analysis.

In some embodiments, the analytic parameters used by the second distributed data analysis include at least one of: area information of the second device, slice information of a network in which the second device is located, the network identifier of a network in which the second device is located and the application identifier of an application which the second device uses.

In some embodiments, as shown in Fig. 8, the apparatus 700 further includes: a first response sending module 730, configured for sending the first communication connection response to the second device. The first communication connection response is configured to indicate that the first device agrees to establish the communication connection supporting the second distributed data analysis.

In some embodiments, the first communication connection response includes the second data analytic identifier and/or the second model identifier. The second data analytic identifier is configured to indicate the type of the second distributed data analysis, the second model identifier is configured to indicate the model used by the second distributed data analysis.

In some embodiments, the first identification message is carried in the discovery solicitation, the at least one device includes the second device. As shown in Fig. 8, the apparatus 700 further includes: a discovery response receiving module 740, configured for receiving the discovery response from the second device. The discovery response is configured to indicate the third distributed data analysis. The third distributed data analysis is identical to the first distributed data analysis. In some embodiments, the third distributed data analysis belongs to the first distributed data analysis.

In some embodiments, the discovery response includes the third identification message. The third identification message includes the third data analytic identifier and/or the third model identifier. The third data analytic identifier is configured to indicate the type of the third distributed data analysis, the third model identifier is configured to indicate the model used by the third distributed data analysis.

In some embodiments, as shown in Fig. 8, the apparatus 700 further includes: a second request sending module 750, configured for sending the second communication connection request to the second device. The second communication connection request is configured to request the establishment of the communication connection supporting the third distributed data analysis.

In some embodiments, the second communication connection request includes the third data analytic identifier and/or the third model identifier. The third data analytic identifier is configured to indicate the type of the third distributed data analysis, the third model identifier is configured to indicate the model used by the third distributed data analysis.

In some embodiments, the second communication connection request includes the analytic parameters used by the third distributed data analysis.

In some embodiments, the analytic parameters used by the third distributed data analysis include at least one of: area information of the first device, slice information of the network in which the first device is located, the network identifier of the network in which the first device is located and an application identifier of an application which the first device uses.

In some embodiments, as shown in Fig. 8, the apparatus 700 further includes: a second response receiving module 760, configured for receiving the second communication connection response from the second device. The second communication connection response is configured to indicate that the second device agrees to establish the communication connection supporting the third distributed data analysis.

In some embodiments, the second communication connection response includes the third data analytic identifier and/or the third model identifier. The third data analytic identifier is configured to indicate the type of the third distributed data analysis, the third model identifier is configured to indicate the model used by the third distributed data analysis.

In some embodiments, the first identification message is carried in the third communication connection request. The third communication connection request is configured to request the establishment of the communication connection supporting the first distributed data analysis. The at least one device includes the second device. As shown in Fig. 8, the apparatus 700 further includes: a third response receiving module 770, configured for receiving the third communication connection response from the second device. The third communication connection response is configured to indicate that, the second device agrees to establish the communication connection supporting the fourth distributed data analysis. The fourth distributed data analysis is identical to the first distributed data analysis. In some embodiments, the fourth distributed data analysis belongs to the first distributed data analysis.

In some embodiments, the third communication connection request further includes the analytic parameters used by the first distributed data analysis.

In some embodiments, the analytic parameters used by the first distributed data analysis include at least one of: area information of the first device, slice information of the network in which the first device is located, the network identifier of the network in which the first device is located and the application identifier of the application which the first device uses.

In summary, in the technical solution provided by the present disclosure, the identification message indicating the distributed data analysis is broadcast by the terminal device, to indicate to the another terminal device that it requires or supports to perform the distributed data analysis, to ensure that the another terminal device that also requires to or supports to perform the distributed data analysis is capable of discovering the terminal device, thereby facilitating the subsequent establishment of the communication connection between these terminal devices that supports the distributed data analysis. In the present application, the distributed data analysis is implemented by using the Proximity-based communication technology. The high latency requirements of some distributed data analyses are better satisfied, and more kinds of distributed data analyses are thus supported.

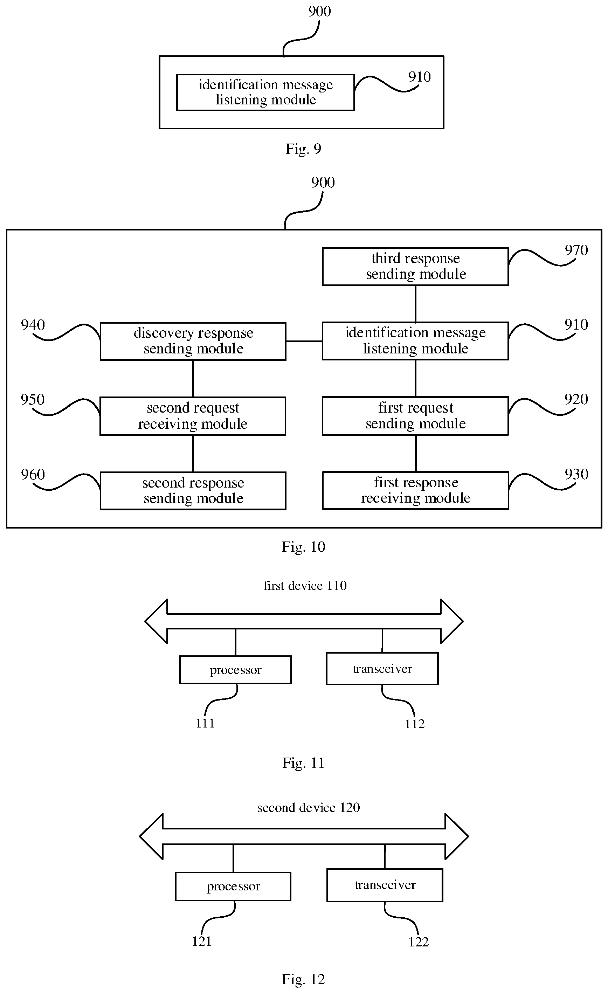

As shown in Fig. 9, a block diagram of a message transmission apparatus according to an embodiment of the present disclosure is illustrated. The apparatus has the function to implement the example method on the second device side described above. The function may be implemented by hardware or by corresponding software executed by hardware. The apparatus may be the second device 24 described above, or may be provided in the second device 24. As shown in Fig. 9, the apparatus 900 may include: an identification message listening module 910.

The identification message listening module 910 is configured for listening for the first identification message broadcast by at least one device. The first identification message is configured to indicate the first distributed data analysis, and the first identification message includes the first data analytic identifier and/or the first model identifier. The first data analytic identifier is configured to indicate the type of the first distributed data analysis, the first model identifier is configured to indicate the model used by the first distributed data analysis.

In some embodiments, in response to the first identification message including the first data analytic identifier and the first model identifier, the first identification message is further configured to determine the association relationship between the first data analytic identifier and the first model identifier.

In some embodiments, the first identification message includes the association relationship between the first data analytic identifier and the first model identifier.

In some embodiments, the data structure of the first identification message is configured to indicate the association relationship between the first data analytic identifier and the first model identifier.

In some embodiments, as shown in Fig. 10, the apparatus 900 further includes: a first request sending module 920, configured for sending the first communication connection request to the first device. The first communication connection request is configured to request the establishment of the communication connection supporting the second distributed data analysis. The second distributed data analysis is identical to the first distributed data analysis. In some embodiments, the second distributed data analysis belongs to the first distributed data analysis.

In some embodiments, the first communication connection request includes the second data analytic identifier and/or the second model identifier. The second data analytic identifier is configured to indicate the type of the second distributed data analysis, the second model identifier is configured to indicate the model used by the second distributed data analysis.

In some embodiments, the first communication connection request includes the analytic parameters used by the second distributed data analysis.

In some embodiments, the analytic parameters used by the second distributed data analysis include at least one of: area information of the second device, slice information of a network in which the second device is located, the network identifier of the network in which the second device is located and the application identifier of the application which the second device uses.

In some embodiments, as shown in Fig. 10, the apparatus 900 further includes: a first response receiving module 930, configured for receiving the first communication connection response from the first device. The first communication connection response is configured to indicate that the first device agrees to establish the communication connection supporting the second distributed data analysis.

In some embodiments, the first communication connection response includes the second data analytic identifier and/or the second model identifier. The second data analytic identifier is configured to indicate the type of the second distributed data analysis, the second model identifier is configured to indicate the model used by the second distributed data analysis.

In some embodiments, the first identification message is carried in the discovery solicitation, the at least one device includes the first device. As shown in Fig. 10, the apparatus 900 further includes: a discovery response sending module 940, configured for sending the discovery response to the first device. The discovery response is configured to indicate the third distributed data analysis. The third distributed data analysis is identical to the first distributed data analysis. In some embodiments, the third distributed data analysis belongs to the first distributed data analysis.

In some embodiments, the discovery response includes the third data analytic identifier and/or the third model identifier. The third data analytic identifier is configured to indicate the type of the third distributed data analysis, the third model identifier is configured to indicate the model used by the third distributed data analysis.

In some embodiments, as shown in Fig. 10, the apparatus 900 further includes: a second request receiving module 950, configured for receiving the second communication connection request from the first device. The second communication connection request is configured to request the establishment of the communication connection supporting the third distributed data analysis.

In some embodiments, the second communication connection request includes the third data analytic identifier and/or the third model identifier. The third data analytic identifier is configured to indicate the type of the third distributed data analysis, the third model identifier is configured to indicate the model used by the third distributed data analysis.

In some embodiments, the second communication connection request includes the analytic parameters used by the third distributed data analysis.

In some embodiments, the analytic parameters used by the third distributed data analysis include at least one of: the area information of the first device, the slice information of the network in which the first device is located, the network identifier of the network in which the first device is located and the application identifier of the application which the first device uses.

In some embodiments, as shown in Fig. 10, the apparatus 900 further includes: a second response sending module 960, configured for sending the second communication connection response to the first device. The second communication connection response is configured to indicate that the second device agrees to establish the communication connection supporting the third distributed data analysis.

In some embodiments, the second communication connection response includes the third data analytic identifier and/or the third model identifier. The third data analytic identifier is configured to indicate the type of the third distributed data analysis, the third model identifier is configured to indicate the model used by the third distributed data analysis.

In some embodiments, the first identification message is carried in the third communication connection request. The third communication connection request is configured to request the establishment of the communication connection supporting the first distributed data analysis. The at least one device includes the first device. As shown in Fig. 10, the apparatus 900 further includes: a third response sending module 970, configured for sending the third communication connection response to the first device. The third communication connection response is configured to indicate that the second device agrees to establish the communication connection supporting the fourth distributed data analysis. The fourth distributed data analysis is identical to the first distributed data analysis. In some embodiments, the fourth distributed data analysis belongs to the first distributed data analysis.

In some embodiments, the third communication connection request further includes the analytic parameters used by the first distributed data analysis.

In some embodiments, the analytic parameters used by the first distributed data analysis include at least one of: the area information of the first device, the slice information of the network in which the first device is located, the network identifier of the network in which the first device is located and an application identifier of the application which the first device uses.

In some embodiments, the third communication connection response includes the fourth data analytic identifier and/or the fourth model identifier. The fourth data analytic identifier is configured to indicate the type of the fourth distributed data analysis, the fourth model identifier is configured to indicate the model used by the fourth distributed data analysis.

In summary, in the technical solution provided by the present disclosure, the identification message indicating the distributed data analysis is broadcast by the terminal device, to indicate to the another terminal device that it requires or supports to perform the distributed data analysis, to ensure that the another terminal device that also requires to or supports to perform the distributed data analysis is capable of discovering the terminal device, thereby facilitating the subsequent establishment of the communication connection between these terminal devices that supports the distributed data analysis. In the present disclosure, the distributed data analysis is implemented by using the proximity-based communication technology. The high latency requirements of some distributed data analyses are better satisfied, and more kinds of distributed data analyses are thus supported.

It should be noted that, when the apparatus provided by the above-mentioned embodiments implements its functions, only the above-mentioned division of each functional module is illustrated. In actual implementation, the above-mentioned functions may be assigned to different functional modules according to practical needs, i.e., the content structure of the apparatus is divided into different functional modules, to accomplish all or part of the above-mentioned functions.

Regarding the apparatus in the above-mentioned embodiments, the specific way in which each module implements the operation has been described in detail in the embodiments concerning the method, and will not be elaborated here.

As shown in Fig. 11, a schematic structural diagram of the first device 110 according to an embodiment of the present disclosure is illustrated. For example, the first device may be configured for performing the message transmission method at the first device side. Specifically, the first device 110 may include: a processor 111, and a transceiver 112 coupled to the processor 111.

The processor 111 includes one or more processing cores. The processor 111 performs various functional applications and information processing by running software programs as well as modules.

The transceiver 112 includes a receiver and a transmitter. In some embodiments, the transceiver 112 is a communication chip.

In some embodiments, the first device 110 further includes a memory and a bus. The memory is connected to the processor via the bus. The memory may be configured to store a computer program, and the processor is configured to execute the computer program to implement the various steps performed by the first device in the method embodiments described above.

In addition, the memory may be implemented by any type of volatile or non-volatile storage devices or a combination thereof, including but not limited to: an RAM (Random-Access Memory) and an ROM (Read-Only Memory), an EPROM (Erasable Programmable Read-Only Memory), an EEPROM (Electrically Erasable Programmable Read-Only Memory), a flash memory or other solid-state storage technologies, a CD-ROM (Compact Disc Read-Only Memory), a DVD (Digital Video Disc) or other optical storages, cartridges, tapes, disk storages or other magnetic storage devices.

The transceiver 112 is configured for broadcasting the first identification message to at least one device. The first identification message is configured to indicate the first distributed data analysis, and the first identification message includes the first data analytic identifier and/or the first model identifier. The first data analytic identifier is configured to indicate the type of the first distributed data analysis, the first model identifier is configured to indicate the model used by the first distributed data analysis.

In some embodiments, in response to the first identification message including the first data analytic identifier and the first model identifier, the first identification message is further configured to determine the association relationship between the first data analytic identifier and the first model identifier.

In some embodiments, the first identification message includes the association relationship between the first data analytic identifier and the first model identifier.

In some embodiments, the data structure of the first identification message is configured to indicate the association relationship between the first data analytic identifier and the first model identifier.

In some embodiments, the at least one device includes the second device. The transceiver 112 is further configured for: receiving the first communication connection request from the second device. The first communication connection request is configured to request the establishment of the communication connection supporting the second distributed data analysis. The second distributed data analysis is identical to the first distributed data analysis. In some embodiments, the second distributed data analysis belongs to the first distributed data analysis.

In some embodiments, the first communication connection request includes the second identification message. The second identification message includes the second data analytic identifier and/or the second model identifier. The second data analytic identifier is configured to indicate the type of the second distributed data analysis, the second model identifier is configured to indicate the model used by the second distributed data analysis.

In some embodiments, the first communication connection request includes the analytic parameters used by the second distributed data analysis.

In some embodiments, the analytic parameters used by the second distributed data analysis include at least one of: the area information of the second device, the slice information of the network in which the second device is located, the network identifier of the network in which the second device is located and the application identifier of the application which the second device uses.

In some embodiments, the transceiver 112 is further configured for: sending the first communication connection response to the second device. The first communication connection response is configured to indicate that the first device agrees to establish the communication connection supporting the second distributed data analysis.

In some embodiments, the first communication connection response includes the second data analytic identifier and/or the second model identifier. The second data analytic identifier is configured to indicate the type of the second distributed data analysis, the second model identifier is configured to indicate the model used by the second distributed data analysis.

In some embodiments, the first identification message is carried in the discovery solicitation, the at least one device includes the second device. The transceiver 112 is further configured for: receiving the discovery response from the second device. The discovery response is configured to indicate the third distributed data analysis. The third distributed data analysis is identical to the first distributed data analysis. In some embodiments, the third distributed data analysis belongs to the first distributed data analysis.

In some embodiments, the discovery response includes the third identification message. The third identification message includes the third data analytic identifier and/or the third model identifier. The third data analytic identifier is configured to indicate the type of the third distributed data analysis, the third model identifier is configured to indicate the model used by the third distributed data analysis.

In some embodiments, the transceiver 112 is further configured for sending the second communication connection request to the second device. The second communication connection request is configured to request the establishment of the communication connection supporting the third distributed data analysis.

In some embodiments, the second communication connection request includes the third data analytic identifier and/or the third model identifier. The third data analytic identifier is configured to indicate the type of the third distributed data analysis, the third model identifier is configured to indicate the model used by the third distributed data analysis.

In some embodiments, the second communication connection request includes the analytic parameters used by the third distributed data analysis.

In some embodiments, the analytic parameters used by the third distributed data analysis include at least one of: the area information of the first device, the slice information of the network in which the first device is located, the network identifier of the network in which the first device is located and the application identifier of the application which the first device uses.

In some embodiments, the transceiver 112 is further configured for receiving the second communication connection response from the second device. The second communication connection response is configured to indicate that the second device agrees to establish the communication connection supporting the third distributed data analysis.

In some embodiments, the second communication connection response includes the third data analytic identifier and/or the third model identifier. The third data analytic identifier is configured to indicate the type of the third distributed data analysis, the third model identifier is configured to indicate the model used by the third distributed data analysis.

In some embodiments, the first identification message is carried in the third communication connection request, the third communication connection request is configured to request the establishment of the communication connection supporting the first distributed data analysis. The at least one device includes the second device. The transceiver 112 is further configured for receiving the third communication connection response from the second device. The third communication connection response is configured to indicate that the second device agrees to establish the communication connection supporting the fourth distributed data analysis. The fourth distributed data analysis is identical to the first distributed data analysis. In some embodiments, the fourth distributed data analysis belongs to the first distributed data analysis.

In some embodiments, the third communication connection request further includes the analytic parameters used by the first distributed data analysis.

In some embodiments, the analytic parameters used by the first distributed data analysis include at least one of: the area information of the first device, the slice information of the network in which the first device is located, the network identifier of the network in which the first device is located and the application identifier of the application which the first device uses.

In some embodiments, the third communication connection response includes the fourth identification message. The fourth identification message includes the fourth data analytic identifier and/or the fourth model identifier. The fourth data analytic identifier is configured to indicate the type of the fourth distributed data analysis, the fourth model identifier is configured to indicate the model used by the fourth distributed data analysis.

As shown in Fig. 12, a schematic structural diagram of the second device 120 according to an embodiment of the present disclosure is illustrated. For example, the second device may be configured for performing the message transmission method at the second device side. Specifically, the second device 120 may include: a processor 121, and a transceiver 122 coupled to the processor 121.

The processor 121 includes one or more processing cores. The processor 121 performs various functional applications and information processing by running software programs as well as modules.

The transceiver 122 includes a receiver and a transmitter. In some embodiments, the transceiver 122 is a communication chip.

In some embodiments, the second device 120 further includes a memory and a bus. The memory is connected to the processor via the bus. The memory may be configured to store a computer program, and the processor is configured to execute the computer program to implement the various steps performed by the second device in the method embodiment described above.

In addition, the memory may be implemented by any type of volatile or non-volatile storage devices or a combination thereof, including but not limited to: an RAM (Random-Access Memory) and an ROM (Read-Only Memory), an EPROM (Erasable Programmable Read-Only Memory), an EEPROM (Electrically Erasable Programmable Read-Only Memory), a flash memory or other solid-state storage technologies, a CD-ROM (Compact Disc Read-Only Memory), a DVD (Digital Video Disc) or other optical storages, cartridges, tapes, disk storages or other magnetic storage devices.

The transceiver 122 is configured for listening for the first identification message broadcast by at least one device. The first identification message is configured to indicate the first distributed data analysis, and the first identification message includes the first data analytic identifier and/or the first model identifier. The first data analytic identifier is configured to indicate the type of the first distributed data analysis, the first model identifier is configured to indicate the model used by the first distributed data analysis.

In some embodiments, in response to the first identification message including the first data analytic identifier and the first model identifier, the first identification message is further configured to determine the association relationship between the first data analytic identifier and the first model identifier.

In some embodiments, the first identification message includes the association relationship between the first data analytic identifier and the first model identifier.

In some embodiments, the data structure of the first identification message is configured to indicate the association relationship between the first data analytic identifier and the first model identifier.

In some embodiments, the at least one device includes the first device. The transceiver 122 is further configured for sending the first communication connection request to the first device. The first communication connection request is configured to request the establishment of the communication connection supporting the second distributed data analysis. The second distributed data analysis is identical to the first distributed data analysis. In some embodiments, the second distributed data analysis belongs to the first distributed data analysis.

In some embodiments, the first communication connection request includes the second data analytic identifier and/or the second model identifier. The second data analytic identifier is configured to indicate the type of the second distributed data analysis, the second model identifier is configured to indicate the model used by the second distributed data analysis.

In some embodiments, the first communication connection request includes the analytic parameters used by the second distributed data analysis.

In some embodiments, the analytic parameters used by the second distributed data analysis include at least one of: the area information of the second device, the slice information of the network in which the second device is located, the network identifier of the network in which the second device is located and the application identifier of the application which the second device uses.

In some embodiments, the transceiver 122 is further configured for receiving the first communication connection response from the first device. The first communication connection response is configured to indicate that, the first device agrees to establish the communication connection supporting the second distributed data analysis.

In some embodiments, the first communication connection response includes the second data analytic identifier and/or the second model identifier. The second data analytic identifier is configured to indicate the type of the second distributed data analysis, the second model identifier is configured to indicate the model used by the second distributed data analysis.

In some embodiments, the first identification message is carried in the discovery solicitation, the at least one device includes the first device. The transceiver 122 is further configured for sending the discovery response to the first device. The discovery response is configured to indicate the third distributed data analysis. The third distributed data analysis is identical to the first distributed data analysis. In some embodiments, the third distributed data analysis belongs to the first distributed data analysis.

In some embodiments, the discovery response includes the third data analytic identifier and/or the third model identifier. The third data analytic identifier is configured to indicate the type of the third distributed data analysis, the third model identifier is configured to indicate the model used by the third distributed data analysis.

In some embodiments, the transceiver 122 is further configured for receiving the second communication connection request from the first device. The second communication connection request is configured to request the establishment of the communication connection supporting the third distributed data analysis.

In some embodiments, the second communication connection request includes the third data analytic identifier and/or the third model identifier. The third data analytic identifier is configured to indicate the type of the third distributed data analysis, the third model identifier is configured to indicate the model used by the third distributed data analysis.

In some embodiments, the second communication connection request includes the analytic parameters used by the third distributed data analysis.

In some embodiments, the analytic parameters used by the third distributed data analysis include at least one of: the area information of the first device, the slice information of the network in which the first device is located, the network identifier of the network in which the first device is located and the application identifier of the application which the first device uses.

In some embodiments, the transceiver 122 is further configured for sending the second communication connection response to the first device. The second communication connection response is configured to indicate that the second device agrees to establish the communication connection supporting the third distributed data analysis.

In some embodiments, the second communication connection response includes the third data analytic identifier and/or the third model identifier. The third data analytic identifier is configured to indicate the type of the third distributed data analysis, the third model identifier is configured to indicate the model used by the third distributed data analysis.

In some embodiments, the first identification message is carried in the third communication connection request, the third communication connection request is configured to request the establishment of the communication connection supporting the first distributed data analysis. The at least one device includes the first device. The transceiver 122 is further configured for sending the third communication connection response to the first device. The third communication connection response is configured to indicate that the second device agrees to establish the communication connection supporting the fourth distributed data analysis. The fourth distributed data analysis is identical to the first distributed data analysis. In some embodiments, the fourth distributed data analysis belongs to the first distributed data analysis.

In some embodiments, the third communication connection request further includes the analytic parameters used by the first distributed data analysis.

In some embodiments, the analytic parameters used by the first distributed data analysis include at least one of: the area information of the first device, the slice information of the network in which the first device is located, the network identifier of the network in which the first device is located and the application identifier of the application which the first device uses.

In some embodiments, the third communication connection response includes the fourth data analytic identifier and/or the fourth model identifier. The fourth data analytic identifier is configured to indicate the type of the fourth distributed data analysis, the fourth model identifier is configured to indicate the model used by the fourth distributed data analysis.

In some embodiment, an individual device may be served as the first device 110 or the second device 120 depending on specific occasions. That is, the individual device may include a processor and a transceiver. In some cases, the processor of the individual device may be regarded as the process 111, while the transceiver of the individual device may be regarded as the transceiver 112. In some other cases, the processor of the individual device may be regarded as the process 121, while the transceiver of the individual device may be regarded as the transceiver 122.

A computer-readable storage medium is further provided in some embodiments of the present disclosure. The storage medium stores a computer program. The computer program is configured to implement the message transmission method at the first device side as mentioned above when being executed by the processor of the first device.

A computer-readable storage medium is further provided in some embodiments of the present disclosure. The storage medium stores a computer program. The computer program is configured to implement the message transmission method at the second device side as mentioned above when being executed by the processor of the second device.

A chip is further provided in some embodiments of the present disclosure. The chip includes a programmable logic circuitry and/or program instructions. When the chip is operating on the first device, the programmable logic circuitry and/or the program instructions are configured for implementing the above-mentioned message transmission method at the first device side.

A chip is further provided in some embodiments of the present disclosure. The chip includes a programmable logic circuitry and/or program instructions. When the chip is operating on the second device, the programmable logic circuitry and/or the program instructions are configured for implementing the above-mentioned message transmission method at the second device side.

A computer program product may be further provided in some embodiments of the present disclosure. When running on the first device, the computer program product enables the computer to perform the message transmission method at the first device side as described above.

A computer program product may be further provided in some embodiments of the present disclosure. When running on the second device, the computer program product enables the computer to perform the message transmission method at the second device side as described above.

One of those skilled in the art should be aware that, in one or more of the above embodiments, the functions described in the present disclosure may be implemented by hardware, software, firmware, or any combination thereof. When implemented by software, these functions may be stored in a computer-readable medium, or transmitted as one or more instructions or codes in a computer-readable medium. The computer-readable media includes a computer storage medium and a communication media. The communication media includes any media that facilitates the transmission of computer programs from one location to another. The storage medium may be any available medium that is accessible to a general-purpose computer or a dedicated computer.

## Claims

1. A message transmission method performed by a first device (22), comprising:
broadcasting (310) a first identification message to at least one device, wherein the first identification message is configured to indicate a first distributed data analysis, and the first identification message comprises a first data analytic identifier and/or a first model identifier;
wherein the first data analytic identifier is configured to indicate a type of the first distributed data analysis, the first model identifier is configured to indicate a model used in the first distributed data analysis,
**characterized in that,**
the first identification message is carried in a discovery solicitation, the at least one device comprises a second device (24);
after the operation of broadcasting (310) the first identification message to the at least one device, the method further comprises:
receiving a discovery response from the second device (24), the discovery response is configured to indicate a third distributed data analysis;
wherein the third distributed data analysis is identical to the first distributed data analysis; or the third distributed data analysis belongs to the first distributed data analysis,
the discovery response comprises a third identification message, the third identification message comprises a third data analytic identifier and/or a third model identifier;
wherein the third data analytic identifier is configured to indicate a type of the third distributed data analysis, and the third model identifier is configured to indicate a model used by the third distributed data analysis.

2. The method as claimed in claim 1, wherein
in response to the first identification message comprising the first data analytic identifier and the first model identifier, the first identification message is further configured to determine an association relationship between the first data analytic identifier and the first model identifier, wherein:
the first identification message comprises the association relationship between the first data analytic identifier and the first model identifier; and/or
a data structure of the first identification message is configured to indicate the association relationship between the first data analytic identifier and the first model identifier.

3. The method as claimed in claim 1, wherein
after the operation of receiving the discovery response from the second device (24), the method further comprises:
sending (334) a second communication connection request to the second device (24), wherein the second communication connection request is configured to request an establishment of a communication connection supporting the third distributed data analysis,
wherein the second communication connection request comprises a third data analytic identifier and/or a third model identifier;
wherein the third data analytic identifier is configured to indicate a type of the third distributed data analysis, the third model identifier is configured to indicate a model used by the third distributed data analysis.

4. The method as claimed in claim 3, wherein
after the operation of sending the second communication connection request to the second device (24), the method further comprises:
receiving the second communication connection response from the second device (24), the second communication connection response is configured to indicate that the second device (24) agrees to establish the communication connection supporting the third distributed data analysis,
the second communication connection response comprises a third data analytic identifier and/or a third model identifier;
wherein the third data analytic identifier is configured to indicate a type of the third distributed data analysis, and the third model identifier is configured to indicate a model used by the third distributed data analysis.

5. A message transmission method performed by a second device (24), comprising:
listening (320) for a first identification message broadcast by at least one device, wherein the first identification message is configured to indicate a first distributed data analysis, and the first identification message comprises a first data analytic identifier and/or a first model identifier;
wherein the first data analytic identifier is configured to indicate a type of the first distributed data analysis, and the first model identifier is configured to indicate a model used by the first distributed data analysis,
**characterized in that,**
the first identification message is carried in a discovery solicitation, the at least one device comprises a first device (22);
after the operation of listening (320) for the first identification message broadcast by the at least one device, the method further comprises:
sending a (334) discovery response to the first device (22), wherein the discovery response is configured to indicate a third distributed data analysis;
wherein the third distributed data analysis is identical to the first distributed data analysis; or the third distributed data analysis belongs to the first distributed data analysis,
the discovery response comprises a third data analytic identifier and/or a third model identifier;
wherein the third data analytic identifier is configured to indicate a type of the third distributed data analysis, the third model identifier is configured to indicate a model used by the third distributed data analysis.

6. The method as claimed in claim 5, wherein
in response to the first identification message comprising the first data analytic identifier and the first model identifier, the first identification message is further configured to determine an association relationship between the first data analytic identifier and the first model identifier, wherein:
the first identification message comprises the association relationship between the first data analytic identifier and the first model identifier; and/or
a data structure of the first identification message is configured to indicate the association relationship between the first data analytic identifier and the first model identifier.

7. The method as claimed in claim 6, wherein
after the operation of sending (334) the first discovery response to the first device (22), the method further comprises:
receiving a second communication connection request from the first device (22), the second communication connection request is configured to request an establishment of a communication connection supporting the third distributed data analysis,
the second communication connection request comprises a third data analytic identifier and/or a third model identifier;
wherein the third data analytic identifier is configured to indicate a type of the third distributed data analysis, and the third model identifier is configured to indicate a model used by the third distributed data analysis.

8. The method as claimed in claim 7, wherein
after the operation of receiving the second communication connection request from the first device (22), the method further comprises:
sending (336) a second communication connection response to the first device (22), wherein the second communication connection response is configured to indicate that the second device (24) agrees to establish the communication connection supporting the third distributed data analysis,
the second communication connection response comprises a third data analytic identifier and/or a third model identifier;
wherein the third data analytic identifier is configured to indicate a type of the third distributed data analysis, and the third model identifier is configured to indicate a model used by the third distributed data analysis.

9. A device (110, 120, 22, 24) comprising a processor (111, 121) and a transceiver (112, 122) coupled with the processor (111, 121), **characterized in that**, the transceiver (112, 122) is configured to perform the message transmission method as claimed in any of claims 1-4 or any of claims 5-8.

## Patentansprüche

1. Nachrichtenübertragungsverfahren, das durch eine erste Vorrichtung (22) durchgeführt wird, umfassend:
Broadcasten (310) einer ersten Identifizierungsnachricht an mindestens eine Vorrichtung, wobei die erste Identifizierungsnachricht konfiguriert ist, um eine erste verteilte Datenanalyse anzugeben, und die erste Identifizierungsnachricht einen ersten datenanalytischen Identifikator und/oder einen ersten Modellidentifikator umfasst;
wobei der erste datenanalytische Identifikator konfiguriert ist, um einen Typ der ersten verteilten Datenanalyse anzugeben, wobei der erste Modellidentifikator konfiguriert ist, um ein in der ersten verteilten Datenanalyse verwendetes Modell anzugeben,
**dadurch gekennzeichnet, dass**
die erste Identifizierungsnachricht in einer Discovery Solicitation mitgeführt wird, die mindestens eine Vorrichtung eine zweite Vorrichtung (24) umfasst;
wobei das Verfahren nach der Operation des Broadcastens (310) der ersten Identifizierungsnachricht an die mindestens eine Vorrichtung des Weiteren umfasst:
Empfangen einer Discovery Response von der zweiten Vorrichtung (24), wobei die Discovery Response konfiguriert ist, um eine dritte verteilte Datenanalyse anzugeben;
wobei die dritte verteilte Datenanalyse mit der ersten verteilten Datenanalyse identisch ist; oder die dritte verteilte Datenanalyse zu der ersten verteilten Datenanalyse gehört,
die Discovery Response eine dritte Identifizierungsnachricht umfasst, wobei die dritte Identifizierungsnachricht einen dritten datenanalytischen Identifikator und/oder einen dritten Modellidentifikator umfasst;
wobei der dritte datenanalytische Identifikator konfiguriert ist, um einen Typ der dritten verteilten Datenanalyse anzugeben, und der dritte Modellidentifikator konfiguriert ist, um ein von der dritten verteilten Datenanalyse verwendetes Modell anzugeben.

2. Verfahren nach Anspruch 1, wobei
die erste Identifizierungsnachricht des Weiteren konfiguriert ist, um als Antwort auf die erste Identifizierungsnachricht, die den ersten datenanalytischen Identifikator und den ersten Modellidentifikator umfasst, eine Assoziationsbeziehung zwischen dem ersten datenanalytischen Identifikator und dem ersten Modellidentifikator zu bestimmen, wobei:
die erste Identifizierungsnachricht die Assoziationsbeziehung zwischen dem ersten datenanalytischen Identifikator und dem ersten Modellidentifikator umfasst;
und/oder
eine Datenstruktur der ersten Identifizierungsnachricht konfiguriert ist, um die Assoziationsbeziehung zwischen dem ersten datenanalytischen Identifikator und dem ersten Modellidentifikator anzugeben.

3. Verfahren nach Anspruch 1, wobei
das Verfahren nach der Operation des Empfangens der Discovery Response von der zweiten Vorrichtung (24) des Weiteren umfasst:
Senden (334) einer zweiten Kommunikationsverbindungsanforderung an die zweite Vorrichtung (24), wobei die zweite Kommunikationsverbindungsanforderung konfiguriert ist, um einen Aufbau einer Kommunikationsverbindung anzufordern, welche die dritte verteilte Datenanalyse unterstützt;
wobei die zweite Kommunikationsverbindungsanforderung einen dritten datenanalytischen Identifikator und/oder einen dritten Modellidentifikator umfasst;
wobei der dritte datenanalytische Identifikator konfiguriert ist, um einen Typ der dritten verteilten Datenanalyse anzugeben, wobei der dritte Modellidentifikator konfiguriert ist, um ein von der dritten verteilten Datenanalyse verwendetes Modell anzugeben.

4. Verfahren nach Anspruch 3, wobei
das Verfahren nach der Operation des Sendens der zweiten Kommunikationsverbindungsanforderung an die zweite Vorrichtung (24) des Weiteren umfasst:
Empfangen der zweiten Kommunikationsverbindungsantwort von der zweiten Vorrichtung (24), wobei die zweite Kommunikationsverbindungsantwort konfiguriert ist, um anzugeben, dass die zweite Vorrichtung (24) dem Aufbau der Kommunikationsverbindung zustimmt, welche die dritte verteilte Datenanalyse unterstützt;
die zweite Kommunikationsverbindungsantwort einen dritten datenanalytischen Identifikator und/oder einen dritten Modellidentifikator umfasst;
wobei der dritte datenanalytische Identifikator konfiguriert ist, um einen Typ der dritten verteilten Datenanalyse anzugeben, und der dritte Modellidentifikator konfiguriert ist, um ein von der dritten verteilten Datenanalyse verwendetes Modell anzugeben.

5. Nachrichtenübertragungsverfahren, das durch eine zweite Vorrichtung (24) durchgeführt wird, umfassend:
Abhören (320) auf einen ersten Identifizierungsnachricht-Broadcast durch mindestens eine Vorrichtung, wobei die erste Identifizierungsnachricht konfiguriert ist, um eine erste verteilte Datenanalyse anzugeben, und die erste Identifizierungsnachricht einen ersten datenanalytischen Identifikator und/oder einen ersten Modellidentifikator umfasst;
wobei der erste datenanalytische Identifikator konfiguriert ist, um einen Typ der ersten verteilten Datenanalyse anzugeben, und der erste Modellidentifikator konfiguriert ist, um ein von der ersten verteilten Datenanalyse verwendetes Modell anzugeben;
**dadurch gekennzeichnet, dass**
die erste Identifizierungsnachricht in einer Discovery Solicitation mitgeführt wird, wobei die mindestens eine Vorrichtung eine zweite Vorrichtung (22) umfasst;
wobei das Verfahren nach der Operation des Abhörens (320) auf den ersten Identifizierungsnachricht-Broadcast durch die mindestens eine Vorrichtung des Weiteren umfasst:
Senden (334) einer Discovery Response an die erste Vorrichtung (22), wobei die Discovery Response konfiguriert ist, um eine dritte verteilte Datenanalyse anzugeben;
wobei die dritte verteilte Datenanalyse mit der ersten verteilten Datenanalyse identisch ist; oder die dritte verteilte Datenanalyse zu der ersten verteilten Datenanalyse gehört;
die Discovery Response einen dritten datenanalytischen Identifikator und/oder einen dritten Modellidentifikator umfasst;
wobei der dritte datenanalytische Identifikator konfiguriert ist, um einen Typ der dritten verteilten Datenanalyse anzugeben, wobei der dritte Modellidentifikator konfiguriert ist, um ein von der dritten verteilten Datenanalyse verwendetes Modell anzugeben.

6. Verfahren nach Anspruch 5, wobei
die erste Identifizierungsnachricht des Weiteren konfiguriert ist, um als Antwort auf die erste Identifizierungsnachricht, die den ersten datenanalytischen Identifikator und den ersten Modellidentifikator umfasst, eine Assoziationsbeziehung zwischen dem ersten datenanalytischen Identifikator und dem ersten Modellidentifikator zu bestimmen, wobei:
die erste Identifizierungsnachricht die Assoziationsbeziehung zwischen dem ersten datenanalytischen Identifikator und dem ersten Modellidentifikator umfasst;
und/oder
eine Datenstruktur der ersten Identifizierungsnachricht konfiguriert ist, um die Assoziationsbeziehung zwischen dem ersten datenanalytischen Identifikator und dem ersten Modellidentifikator anzugeben.

7. Verfahren nach Anspruch 6, wobei
das Verfahren nach der Operation des Sendens (334) der ersten Discovery Response an die erste Vorrichtung (22) des Weiteren umfasst:
Empfangen einer zweiten Kommunikationsverbindungsanforderung von der ersten Vorrichtung (22), wobei die zweite Kommunikationsverbindungsanforderung konfiguriert ist, um einen Aufbau einer Kommunikationsverbindung anzufordern, welche die dritte verteilte Datenanalyse unterstützt;
die zweite Kommunikationsverbindungsanforderung einen dritten datenanalytischen Identifikator und/oder einen dritten Modellidentifikator umfasst;
wobei der dritte datenanalytische Identifikator konfiguriert ist, um einen Typ der dritten verteilten Datenanalyse anzugeben, und der dritte Modellidentifikator konfiguriert ist, um ein von der dritten verteilten Datenanalyse verwendetes Modell anzugeben.

8. Verfahren nach Anspruch 7, wobei
das Verfahren nach der Operation des Empfangens der zweiten Kommunikationsverbindungsanforderung von der ersten Vorrichtung (22) des Weiteren umfasst:
Senden (336) einer zweiten Kommunikationsverbindungsantwort an die erste Vorrichtung (22), wobei die zweite Kommunikationsverbindungsantwort konfiguriert ist, um anzugeben, dass die zweite Vorrichtung (24) dem Aufbau der Kommunikationsverbindung zustimmt, welche die dritte verteilte Datenanalyse unterstützt;
die zweite Kommunikationsverbindungsantwort einen dritten datenanalytischen Identifikator und/oder einen dritten Modellidentifikator umfasst;
wobei der dritte datenanalytische Identifikator konfiguriert ist, um einen Typ der dritten verteilten Datenanalyse anzugeben, und der dritte Modellidentifikator konfiguriert ist, um ein von der dritten verteilten Datenanalyse verwendetes Modell anzugeben.

9. Vorrichtung (110, 120, 22, 24), umfassend einen Prozessor (111, 121) und einen Sendeempfänger (112, 122), der mit dem Prozessor (111, 121) gekoppelt ist, **dadurch gekennzeichnet, dass** der Sendeempfänger (112, 122) konfiguriert ist, um das Nachrichtenübertragungsverfahren nach einem der Ansprüche 1 bis 4 oder einem der Ansprüche 5 bis 8 durchzuführen.

## Revendications

1. Procédé de transmission de message exécuté par un premier dispositif (22), comprenant :
la radiodiffusion (310) d'un premier message d'identification à au moins un dispositif, ce premier message d'identification étant configuré de façon à indiquer une première analyse de données distribuées, et ce premier message d'identification comprenant un premier identifiant analytique de données et/ou un premier identifiant de modèle ;
le premier identifiant analytique de données étant configuré de façon à indiquer un type de la première analyse de données distribuées, le premier identifiant de modèle étant configuré de façon à indiquer un modèle utilisé dans la première analyse de données distribuées,
**caractérisé en ce que**
le premier message d'identification est acheminé dans une sollicitation de découverte, l'au moins un dispositif comprenant un deuxième dispositif (24) ;
après l'opération de radiodiffusion (310) du premier message d'identification à l'au moins un dispositif, ce procédé comprend en outre :
la réception d'une réponse de découverte venant du deuxième dispositif (24), cette réponse de découverte étant configurée de façon à indiquer une troisième analyse de données distribuées ;
cette troisième analyse de données distribuées étant identique à la première analyse de données distribuées ;
ou cette troisième analyse de données distribuées appartenant à la première analyse de données distribuées, la réponse de découverte comprenant un troisième message d'identification, ce troisième message d'identification comprenant un troisième identifiant analytique de données et/ou un troisième identifiant de modèle ;
le troisième identifiant analytique de données étant configuré de façon à indiquer un type de la troisième analyse de données distribuées, et le troisième identifiant de modèle étant configuré de façon à indiquer un modèle utilisé par la troisième analyse de données distribuées.

2. Procédé selon la revendication 1, dans lequel :
en réponse au fait que le premier message d'identification comprend le premier identifiant analytique de données et le premier identifiant de modèle, le premier message d'identification est configuré en outre de façon à déterminer une relation d'association entre le premier identifiant analytique de données et le premier identifiant de modèle,
le premier message d'identification de modèle comprenant la relation d'association entre le premier identifiant analytique de données et le premier identifiant de modèle ; et/ou
une structure de données du premier message d'identification étant configurée de façon à indiquer la relation d'association entre le premier identifiant analytique de données et le premier identifiant de modèle.

3. Procédé selon la revendication 1, ce procédé comprenant en outre :
après l'opération de réception de la réponse de découverte venant du deuxième dispositif (24),
l'envoi (334) d'une deuxième demande de connexion de communication au deuxième dispositif (24), cette deuxième demande de connexion de communication étant configurée de façon à demander un établissement d'une connexion de communication prenant en charge la troisième analyse de données distribuées,
cette deuxième demande de connexion de communication comprenant un troisième identifiant analytique de données et/ou un troisième identifiant de modèle ;
le troisième identifiant analytique de données étant configuré de façon à indiquer un type de la troisième analyse de données distribuée, le troisième identifiant de modèle étant configuré de façon à indiquer un modèle utilisé dans la troisième analyse de données distribuées.

4. Procédé selon la revendication 3, ce procédé comprenant en outre :
après l'opération d'envoi de la deuxième demande de connexion de communication au deuxième dispositif (24), la réception de la deuxième réponse à la demande de connexion de communication venant du deuxième dispositif (24), la deuxième réponse à la demande de connexion de communication étant configurée de façon à indiquer que le deuxième dispositif (24) accepte d'établir la connexion de communication prenant en charge la troisième analyse de données distribuées,
la deuxième réponse à la connexion de communication comprenant un troisième identifiant analytique de données et/ou un troisième identifiant de modèle ;
le troisième identifiant analytique de données étant configuré de façon à indiquer un type de la troisième analyse de données distribuées, et le troisième identifiant de modèle étant configuré de façon à indiquer un modèle utilisé dans la troisième analyse de données distribuées,

5. Procédé de transmission de message exécuté par un deuxième dispositif (24), comprenant :
l'écoute (320) d'un premier message d'identification radiodiffusé par au moins un dispositif, ce premier message d'identification étant configuré de façon à indiquer une première analyse de données distribuées, et ce premier message d'identification comprenant un premier identifiant analytique de données et/ou un premier identifiant de modèle ;
le premier identifiant analytique de données étant configuré de façon à indiquer un type de la première analyse de données distribuées, et le premier identifiant de modèle étant configuré de façon à indiquer un modèle utilisé par la première analyse de données distribuées,
**caractérisé en ce que**
le premier message d'identification est acheminé dans une sollicitation de découverte, l'au moins un dispositif comprenant un premier dispositif (22) ;
après l'opération d'écoute (320) du premier message d'identification diffusé par l'au moins un dispositif, ce procédé comprend en outre :
l'envoi (334) d'une réponse de découverte au premier dispositif (22), cette réponse de découverte étant configurée de façon à indiquer une troisième analyse de données distribuées ;
cette troisième analyse de données distribuées étant identique à la première analyse de données distribuées ;
ou la troisième analyse de données distribuées appartenant à la première analyse de données distribuées, la réponse de découverte comprenant un troisième identifiant analytique de données et/ou un troisième identifiant de modèle ;
le troisième identifiant analytique de données étant configuré de façon à indiquer un type de la troisième analyse de données distribuées, le troisième identifiant de modèle étant configuré de façon à indiquer un modèle utilisé par la troisième analyse de données distribuées.

6. Procédé selon la revendication 5, dans lequel :
en réponse au fait que le premier message d'identification comprend le premier identifiant analytique de données et le premier identifiant de modèle, le premier message d'identification est configuré en outre de façon à déterminer une relation d'association entre le premier identifiant analytique de données et le premier identifiant de modèle,
le premier identifiant de modèle comprenant la relation d'association entre le premier identifiant analytique de données et le premier identifiant de modèle ; et/ou
une structure de données du premier message d'identification étant configurée de façon à indiquer la relation d'association entre le premier identifiant analytique de données et le premier identifiant de modèle.

7. Procédé selon la revendication 6, ce procédé comprenant en outre :
après l'opération d'envoi (334) de la première réponse de découverte venant du premier dispositif (22),
la réception d'une deuxième demande de connexion de communication venant du premier dispositif (22), cette deuxième demande de connexion de communication étant configurée de façon à demander un établissement d'une connexion de communication prenant en charge la troisième analyse de données distribuées,
cette deuxième demande de connexion de communication comprenant un troisième identifiant analytique de données et/ou un troisième identifiant de modèle ;
le troisième identifiant analytique de données étant configuré de façon à indiquer un type de la troisième analyse de données distribuées, et le troisième identifiant de modèle étant configuré de façon à indiquer un modèle utilisé par la troisième analyse de données distribuées.

8. Procédé selon la revendication 7, ce procédé comprenant en outre :
après l'opération de réception de la deuxième demande de connexion de communication venant du premier dispositif (22),
l'envoi (336) d'une deuxième réponse à la demande de connexion de communication au premier dispositif (22), la deuxième réponse à la demande de connexion de communication étant configurée de façon à indiquer que le deuxième dispositif (24) accepte d'établir la connexion de communication prenant en charge la troisième analyse de données distribuées,
la deuxième réponse à la demande de connexion de communication comprenant un troisième identifiant analytique de données et/ou un troisième identifiant de modèle ;
le troisième identifiant analytique de données étant configuré de façon à indiquer un type de la troisième analyse de données distribuées, et le troisième identifiant de modèle étant configuré de façon à indiquer un modèle utilisé par la troisième analyse de données distribuées,

9. Dispositif (110, 120, 22, 24) comprenant un processeur (111, 121) et un émetteur-récepteur (112, 122) couplé au processeur (111, 121), **caractérisé en ce que** l'émetteur-récepteur (112, 122) est configuré de façon à exécuter le procédé de transmission de message selon l'une quelconque des revendications 1 à 4 ou selon l'une quelconque des revendications 5 à 8.
